(19) Europäisches Patentamt
European Patent Office
Office européen des brevets

(11) Veröffentlichungsnummer: **0 534 196 A1**

# (12) EUROPÄISCHE PATENTANMELDUNG

(21) Anmeldenummer: **92115130.4**

(22) Anmeldetag: **04.09.92**

(51) Int. Cl.$^5$: **C08L 77/00**, C08L 71/12, //(C08L77/00,71:12,25:04), (C08L71/12,77:00,25:04)

(30) Priorität: **21.09.91 DE 4131550**

(43) Veröffentlichungstag der Anmeldung: **31.03.93 Patentblatt 93/13**

(84) Benannte Vertragsstaaten: **BE DE FR GB NL**

(71) Anmelder: **BASF Aktiengesellschaft**
**Carl-Bosch-Strasse 38**
**W-6700 Ludwigshafen(DE)**

(72) Erfinder: **Muehlbach, Klaus, Dr.**
**Im Zaunruecken 20**
**W-6718 Gruenstadt(DE)**
Erfinder: **Zeltner, Doris, Dr.**
**Viehtriftstrasse 94**
**W-6725 Roemerberg(DE)**

## (54) Thermoplastische Formmassen auf Basis von Polyamiden und Polyphenylenethern.

(57) Thermoplastische Formmassen auf Basis von, gegebenenfalls modifizierten, Polyphenylenethern und Polyamiden, enthaltend als wesentliche Komponenten

A) 25 bis 74,8 Gew.-% eines thermoplastischen Polyamids,

B) 25 bis 74,8 Gew.-% eines Polyphenylenethers,

C) 0,2 bis 15 Gew.-% zumindest teilweise vernetzte Polymerpartikel mit einer Glasübergangstemperatur (Tg) von oberhalb 0 °C,

D) 0 bis 25 Gew.-% eines schlagzähmodifizierenden Polymeren,

E) 0 bis 50 Gew.-% eines faser- oder teilchenförmigen Füllstoffs oder deren Mischungen,

F) 0 bis 20 Gew.-% eines Flammschutzmittels.

EP 0 534 196 A1

Die vorliegende Erfindung betrifft thermoplastische Formmassen auf Basis von, gegebenenfalls modifizierten, Polyphenylenethern (PPE) und Polyamiden, enthaltend als wesentliche Komponenten

A) 25 bis 74,8 Gew.-% eines thermoplastischen Polyamids,

B) 25 bis 74,8 Gew.-% eines Polyphenylenethers,

C) 0,2 bis 15 Gew.-% zumindest teilweise vernetzte Polymerpartikel mit einer Glasübergangstemperatur (Tg) von oberhalb 0 ° C,

D) 0 bis 25 Gew.-% eines schlagzähmodifizierenden Polymeren,

E) 0 bis 50 Gew.-% eines faser- oder teilchenförmigen Füllstoffs oder deren Mischungen,

F) 0 bis 20 Gew.-% eines Flammschutzmittels.

Formkörper, die aus Mischungen von Polyamiden und PPE hergestellt werden, weisen im allgemeinen gute Gebrauchseigenschaften auf, wenn schlagzähmodifizierende Kautschuke enthalten sind und eine ausreichende Phasenhaftung der beiden Hauptkomponenten gegeben ist.

Ein gängiger Weg, die Phasenhaftung zwischen Polyamid und PPE zu verbessern, ist die Modifizierung der PPE-Phase mittels vinylaromatischer Verbindungen oder mittels polarer Verbindungen, die olefinische Gruppen enthalten.

So werden gemäß den Schriften EP-A-236 593, EP-A-046 040, EP-A-024 120, DE-A-3 619 225 und WO-A-87/00540 ungesättigte Carbonsäuren oder deren Derivate in das PPE eingebaut, bzw. säuremodifizierte vinylaromatische Polymere der Mischung aus Polyamid und PPE zugesetzt.

In der US 4 681 915 wird ein Verfahren beschrieben, bei dem die Eigenschaften solcher Mischungen durch Mitverwendung von Kern-Schale-Teilchen, bei denen ein Butylacrylat-Kern mit einer vernetzten Styrol-Schale umgehen ist, verbessert werden. Ebenso wird gemäß der FR-A-2 107 491 die Schlagzähigkeit von Polyamid/PPE-Blends verbessert, indem Kern-Schale-Teilchen auf Basis eines Karntschuk-Kerns und einer säuregruppenhaltigen Styrolschale verwendet werden.

Nachteilig ist bei allen diesen Verfahren, daß entweder Säuregruppen aufwendig einpolymerisiert werden müssen, oder das spezielle Kern-Schale-Teilchen erst durch Emulsionspolymerisation hergestellt werden müssen.

Aufgabe der vorliegenden Erfindung war es deshalb, Polyamid/PPE-Mischungen (Blends) mit ausgewogenem Eigenschaftsspektrum zur Verfügung zu stellen.

Demgemäß wurden die eingangs definierten thermoplastischen Formmassen gefunden.

Im einzelnen haben die Komponenten in den erfindungsgemäßen Formmassen folgende Bedeutung:

Komponente A (Polyamid):

Die als Komponente A) in den Massen enthaltenen Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von $\omega$-Aminocarbonsäuren oder Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner das Amid der Poly-11-aminoundecansäure und ein Polyamid aus Di(p-aminocyclohexyl)-methan und Dodecandisäure.

Es ist auch möglich, gemäß der Erfindung Polyamide zu verwenden, die durch Copolykondensation von zwei oder mehr der obengenannten Monomeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Bevorzugte derartige teilaromatische Copolyamide enthalten als Komponente $a_1$) Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäure kann durch Isophthalsäure oder andere aromatische Dicarbonsäuren, vorzugsweise solche, in denen die Carboxylgruppen in para-Stellung stehen, ersetzt werden.

Besonders bevorzugt werden teilaromatische Copolyamide, die neben Einheiten $a_1$), die sich von Terephthalsäure und Hexamethylendiamin ableiten, Einheiten, die sich von $\epsilon$-Caprolactam ableiten ($a_2$),

und/oder Einheiten, die sich von Adipinsäure und Hexamethylendiamin ($a_3$) ableiten, enthalten.

Der Anteil an Einheiten die sich von ε-Caprolactam ableiten, beträgt in solchen Polyamiden üblicherweise bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, üblicherweise bis zu 60 Gew.-%, vorzugsweise 30 bis 60 Gew.-% und insbesondere 35 bis 55 Gew.-% beträgt.

Derartige Copolyamide können auch sowohl Einheiten von ε-Caprolactam als auch Einheiten von Adipinsäure und Hexamethylendiamin enthalten. In diesem Fall ist es vorteilhaft, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten $a_1$)) und 20 bis 50, vorzugsweise 25 bis 40 Gew.-% Einheiten, die sich von ε-Caprolactam ableiten (Einheiten $a_2$)), erwiesen.

Die Herstellung derartiger teilaromatischer Copolyamide kann z.B. nach dem in den EP-A-129 195 und EP 129 196 beschriebenen Verfahren erfolgen.

Bevorzugt werden lineare Polyamide mit einem Schmelzpunkt von über 200 °C.

Bevorzugte Polyamide sind Polyhexamethylenadipinsäureamid, Polyhexamethylensebacinsäureamid und Polycaprolactam sowie Polyamid 6/6T (Copolyamid aus Caprolactam, Hexamethylendiamin/Terephthalsäure) und Polyamid 66/6T (Copolyamid aus Hexamethylendiamin/Adipinsäure/Terephthalsäure).

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Die Polyamide A) weisen im allgemeinen eine relative Viskosität von 2 bis 5 dl/g auf, bestimmt an einer 1 gew.-%igen Lösung in 96 %iger Schwefelsäure bei 23 °C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Der Anteil der Polyamide A) an den erfindungsgemäßen Formmassen beträgt 25 bis 74,8, vorzugsweise 33 bis 65 und insbesondere 36,5 bis 60 Gew.-%.

Komponente B (Polyphenylenether):

Als Komponente B) enthalten die erfindungsgemäßen Formmassen 25 bis 74,8, bevorzugt 30 bis 65 und insbesondere 40 bis 60 Gew.-% eines Polyphenylenethers.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität ($\eta_{red}$) von 0,2 bis 0,9 dl/g, vorzugsweise von 0,35 bis 0,8 und insbesondere 0,45 bis 0,6, gemessen in einer 0,5 gew.%-igen Lösung in Chloroform bei 25 °C nach DIN 53 726.

Geeignete Polyphenylenether $b_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylenether),Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether, Poly(2,6-dibenzyl-1,4-phenylen)ether, Poly(2-ethoxi-1,4-phenylenether), Poly(2-chlor-1,4-phenylenether),Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly-(2,6-dimethyl-1,4-phenylenether),Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Weiterhin sind Pfropfcopolymere aus Polyphenylenether und vinylaromatischen Polymeren wie Styrol, $\alpha$-Methylstyrol, Vinyltoluol und Chlorstyrol geeignet.

Bevorzugt werden funktionalisierte oder modifizierte Polyphenylenether eingesetzt, wie sie z.B. aus WO-A 86/02086, WO-A 87/00540, EP-A-222 246, EP-A-223 116 und EP-A-254 048 bekannt sind.

Üblicherweise wird bei deren Herstellung ein Polyphenylenether $b_1$) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine bessere Verträglichkeit mit dem Polyamid erreicht wird.

Die Modifizierung wird im allgemeinen durch Umsetzung eines Polyphenylenethers $b_1$) mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Bevorzugt wird in den erfindungsgemäßen Formmassen als Komponente B) ein modifizierter Polyphenylenether eingesetzt, der durch Umsetzung von

$b_1$) 70 bis 99,95, vorzugsweise 75-95 Gew.-%, eines unmodifizierten Polyphenylenethers,

$b_2$) 0 bis 29,95, vorzugsweise 4,89-20 Gew.-%, eines vinylaromatischen Polymeren,

$b_3$) 0,05 bis 30, vorzugsweise 0,1 bis 5 Gew.-%, mindestens einer Verbindung aus der Gruppe gebildet aus

- $b_{31}$) $\alpha,\beta$-ungesättigten Dicarbonylverbindungen,
- $b_{32}$) Amid-Gruppen enthaltenden Monomeren mit einer polymerisierbaren Doppelbindung und
- $b_{33}$) Lactam-Gruppen enthaltenden Monomeren mit einer polymerisierbaren Doppelbindung,

$b_4$) 0 bis 5, vorzugsweise 0,01-0,09 Gew.-%, eines Radikalstarters

wobei sich die Gewichtsprozente auf die Summe von $b_1$) bis $b_4$) beziehen, in geeigneten Misch- und Knetaggregaten wie Zweischneckenextrudern erhältlich ist. Die Verweilzeit liegt dabei vorzugsweise im Bereich von 0,5 bis 15 Minuten bei Temperaturen von 240 bis 375 °C.

Das vinylaromatische Polymer $b_2$) ist vorzugsweise mit dem eingesetzten Polyphenylenether verträglich.

Das Molekulargewicht dieser an sich bekannten und im Handel erhältlichen Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere $b_2$) sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Geeignete Modifiziermittel $b_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$-$C_8$-Alkanolen (Monomere $b_{31}$), die Mono- oder Diamide dieser Säuren wie N-Phenylmaleinimid (Monomere $b_{32}$) und Maleinhydrazid. Andere geeignete Modifizierungsmittel sind das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Als Monomere $b_{33}$) seien beispielsweise N-Vinylpyrrolidon und (Meth)acryloylcaprolactam genannt.

Als Radikalstarter $b_4$) seien genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

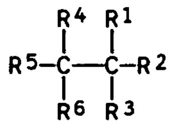

wobei $R^1$ bis $R^6$ Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Komponente C (vernetzte Polymerpartikel):

Bei der Komponente C handelt es sich um vernetzte Polymerpartikel mit einer Glasübergangstemperatur von oberhalb 0 °C, vorzugsweise zwischen 50 und 150 °C und insbesondere zwischen 80 °C und 120 °C. Der Quellungsindex der Komponenten C liegt im Bereich von 2 bis 80, vorzugsweise von 5 bis 40.

Der Quellungsindex wird gemäß nachfolgender Vorschrift bestimmt.

40 g einer 20 %igen Dispersion werden bei 60 °C und 700 Torr in einer Teflonform 18 Stunden getrocknet. Von dem so entstandenen Film werden nun ca. 0,2 g in ein 50 ml Penecilinglas eingewogen und 12 Stunden unter Toluol angelöst. Das Toluol wird abgesaugt und die Probe ausgewogen. Die Probe wird daraufhin 18 Stunden bei 110 °C unter Vakuum getrocknet und erneut ausgewogen.

$$Qj = \frac{\text{Auswaage feucht in g}}{\text{Auswaage trocken in g}}$$

Komponente C) wird vorzugsweise aus vinylaromatischen Verbindungen durch Polymerisation aufgebaut. Geeignete Monomere $c_1$) sind Styrol, $\alpha$-Methylstyrol, p-Methylstyrol, Chlorstyrol, Vinyl- und Isopropenylnaphthalin.

Weiterhin können auch Comonomere $c_2$) wie beispielsweise Acrylnitril, Methacrylnitril, Acrylsäure- oder Methacrylsäureester, Vinylether, Butadien oder Isopren mitverwendet werden. Bevorzugt werden $C_1$- bis $C_4$-Methacrylsäureester verwendet.

Das Mengenverhältnis von $c_1$) zu $c_2$) unterliegt keiner Beschränkung solange die Glasübergangstemperatur des Gesamtpolymerisats oberhalb von 0 °C liegt.

Die Vernetzung der Komponenten C) wird vorzugsweise durch Einbau geeigneter vernetzender Comonomerer $c_3$) während der Polymerisation erreicht: bei Einsatz mehrfunktioneller Comonomerer $c_2$ sind vernetzende Comonomere $c_3$) jedoch nicht zwingend erforderlich.

Die Menge an $c_3$) liegt im allgemeinen zwischen 0,5 und 15 Gew.-%, vorzugsweise zwischen 1,0 und 10 Gew.-% bezogen auf C). Geeignete Comonomere $c_3$), die vernetzend wirken, sind solche mit zwei oder mehr copolymerisierbaren, nichtkonjugierten Doppelbindungen wie Divinylbenzol, Diallylmaleat, Diallylfumarat, Diallylphthalat, Triallylcyanurat, Triallylisocyanurat, Tricyclodecenylacrylat, Tricyclodecenylmethacrylat, Allylacrylat, Allylmethacrylat, $C_1$-$C_4$-Alkenyldiolacrylate und $C_1$-$C_4$-Alkenyldiolmethacrylate.

Die Komponente C) kann durch die üblichen Polymerisationsverfahren wie Emulsions-, Suspensions- oder Mikrosuspensionspolymerisation hergestellt werden.

Bevorzugt wird dabei die Emulsionspolymerisation. Details können den Monographien von Bassett und Hamilec, "Emulsion Polymers and Emulsion Polymerization", ACS symposium series, American Chemical Society, Washington 1981 oder von Piirma, "Emulsion Polymerization", Academic Press, New York 1982, entnommen werden.

Die Komponente C) kann auch mehrstufig aus einem Kern und einer oder mehrerer Schalen aufgebaut sein. Dabei liegt die Glasübergangstemperatur jeder Schale vorzugsweise oberhalb von 0 °C.

Die mittlere Teilchengröße ($d_{50}$-Wert der integralen Massenverteilung) der hergestellten Teilchen C) liegt vorzugsweise im Bereich von 0,05 bis 5 µm, bevorzugt im Bereich von 0,05 bis 1 µm. Sie wird z.B. mittels einer analytischen Ultrazentrifuge entsprechend der Methode von W. Scholtan und H. Lange, Kolloid-Z. und Z. Polymere 250, S. 782-796 (1972) bestimmt.

Der Anteil der Komponente C) an den erfindungsgemäßen Formmassen beträgt 0,2 bis 15 Gew.-%, bevorzugt 1 bis 12 Gew.-% und insbesondere 1,5 bis 8 Gew.-%.

Vor und während des Mischens der Komponenten A), B) und C) können noch kautschukartige Polymere zur Schlagzähmodifizierung D), Füllstoffe E) und Flammschutzmittel F) zugegeben werden.

Komponente D (Schlagzähmodifier):

Es können übliche Schlagzähmodifier D) verwendet werden, die für Polyamide (Komponente A) geeignet sind und Kautschuke D), die üblicherweise Polyphenylenether B) schlagzähmodifizieren.

Als Komponente D) werden die üblichen zur Verbesserung der Zähigkeit von Polyamiden oder Polyphenylenethern eingesetzten schlagzäh modifizierenden Polymeren (auch Schlagzähmodifier, Elastomere oder Kautschuke genannt) verwendet, in Mengen von 0 bis 25, bevorzugt 3 bis 20 und insbesondere 5 bis 15 Gew.%.

Als Kautschuke, die die Zähigkeit von Polyphenylenethern erhöhen, seien z.B. folgende genannt:

Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Ferner können Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, eingesetzt werden.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US-A 4 085 163, US-A 4 041 103, US-A 3 149 182, US-A 3 231 635 und US-A 3 462 162 verwiesen.

Bevorzugt sind Formmassen, die keine weiteren Blockcopolymere enthalten.

Auch im Handel sind entsprechende Produkte erhältlich, z.B. ein Polyoctylen der Bezeichnung Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Kraton®- G-Typen (Shell), die Finaprene®-Typen (Fina) und die Europrene®-SOL-TR-Typen (Enichem) genannt.

Kautschuke, die die Zähigkeit von Polyamiden erhöhen, weisen i.a. zwei wesentliche Merkmale auf: sie enthalten einen elastomeren Anteil, der eine Glastemperatur von weniger als -10 °C, vorzugsweise von weniger als -30 °C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25 °C, unter einem weichen Bestandteil ein Polymerisat mit einer Glastemperatur von höchstens 0 °C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.%, vorzugsweise 0,25 bis 15 Gew.%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern D) sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Komponente E (Füllstoffe):

Als weiteren Bestandteil können die erfindungsgemäßen Formmassen 0 bis 50, vorzugsweise 5 bis 40 und insbesondere 10 bis 35 Gew.-% eines faser- oder teilchenförmigen Füllstoffes (Komponente E) oder deren Mischungen enthalten.

Bevorzugte faserförmige Verstärkungsstoffe (Komponente E) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 μm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Komponente F (Flammschutzmittel):

Die erfindungsgemäßen Formmassen können weiterhin Flammschutzmittel F) in einer Konzentration von 0 bis 20 Gew.-%, bevorzugt von 1 bis 15 Gew.-%, insbesondere 3 bis 10 Gew.-%, bezogen auf das Gesamtgewicht der Formmasse, enthalten.

Geeignete Flammschutzmittel sind z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A, der Tetrabromphthalsäure, des 2,6-Dibromphenols und 2,4,6-Tribromphenols und deren Derivate.

Bevorzugtes Flammschutzmittel F) ist elementarer Phosphor. In der Regel kann der elementare Phosphor mit z.B. Polyurethanen oder Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt sind Kombinationen von elementarem Phosphor mit 1,2,3,4,7,8,9,10,13,13,14,14-Dodecachloro-1,4,4a,5,6,6a,7,10,10a,11,12,12a -dodecahydro-1,4:7,10-dimethanodibenzo(a,e)-cyclooctan (Dechlorane®Plus, Occidental Chemical Corp.) und gegebenenfalls einem Synergisten z.B. Antimontrioxid.

Phosphorverbindungen wie organische Phosphate, Phosphonate, Phosphinate, Phosphinoxide, Phosphine oder Phosphite sind ebenfalls bevorzugt. Als Beispiel seien Triphenylphosphinoxid und Triphenylphosphat genannt. Dieses kann allein oder vermischt mit Hexabrombenzol oder einem chlorierten Biphenyl und, wahlweise, Antimonoxid verwendet werden.

Typisch für die bevorzugten Phosphorverbindungen, die gemäß der vorliegenden Erfindung verwendet werden können, sind solche der folgenden allgemeinen Formel

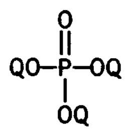

worin Q für gleiche oder verschiedene Reste Kohlenwasserstoffreste, wie Alkyl, Cycloalkyl, Aryl, alkylsubstituiertes Aryl und arylsubstituiertes Alkyl steht, ferner Halogen, Wasserstoff und deren Kombinationen, vorausgesetzt, daß mindestens einer der für Q stehenden Reste ein Arylrest ist.

Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5'-trimethylhexylphosphat), Ethyldiphenylphosphat, 2-Ethylhexyldi(p-tolyl)phosphat, Bis-(2-ethylhexyl)phenylphosphat, Tri(nonylphenyl)-phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis-(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Zusatzstoffe:

Neben den wesentlichen Komponenten A), B) und C) sowie gegebenenfalls D) bis F) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-%, bezogen auf das Gesamtgewicht der Komponenten A) bis F).

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser

Verbindungen, vorzugsweise in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Materialien zur Erhöhung der Abschirmung gegen elektromagnetische Wellen wie Metallflocken, -pulver, -fasern, metallbeschichtete Füllstoffe können ebenfalls mitverwendet werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen können nach an sich bekannten Verfahren hergestellt werden, indem man die Ausgangskomponenten A), B), C) und gegebenenfalls D), E) und F) in üblichen Mischvorrichtungen wie Schneckenextruder vorzugsweise Zweischneckenextruder, Brabender-Mühlen oder Banbury-Mühlen mischt und anschließend extrudiert. Nach der Extrusion wird das Extrudat abgekühlt und zerkleinert.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 240 bis 380 °C erforderlich. Die Abmischreihenfolge der Komponenten kann variiert werden, so können zwei oder ggf. drei Komponenten vorgemischt werden, es können aber auch alle Komponenten gemeinsam gemischt werden.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die bevorzugte Morphologie der erfindungsgemäßen Formmassen ist charakterisiert durch eine Matrix, die von der Komponente A) gebildet wird und darin dispergierten Partikeln der Komponente B). Der Schlagzähmodifier D) kann sowohl in A) als auch in B), vorzugsweise jedoch in B) lokalisiert sein. Die mittlere Teilchengröße von B) (Zahlenmittel, bestimmt durch Auszählen elektronenmikroskopischer Aufnahmen) sollte unter 2, vorzugsweise unter 1 $\mu$m liegen. Eine solche Morphologie läßt sich durch geeignete Herstellbedingungen, geeignete Wahl der Mengen von A), B) und D) sowie der Molekulargewichte von A), B) und D) einstellen. Die entsprechenden Zusammenhänge sind dem Fachmann bekannt.

Die erfindungsgemäßen Formmassen zeichnen sich durch eine gute Verarbeitbarkeit aus. Daraus herstellbare Formkörper weisen ein ausgezeichnetes Gesamtspektrum der mechanischen sowie elektrischen Eigenschaften aus.

Infolge dieses Eigenschaftsspektrums eignen sich die aus den erfindungsgemäßen Formmassen herstellbaren Formkörper besonders für Karosserieteile und Funktionsteile im Motorbereich von Kraftfahrzeugen sowie für den Elektrosektor.

Füllstoffhaltige bzw. verstärkte Formkörper werden vor allem als Radblenden verwendet.

Beispiele

Es wurden folgende Komponenten eingesetzt:

$A_1$) Polyamid 6,6 (Viskositätszahl nach DIN 53 727 in konzentrierter Ameisensäure: VZ = 134 $cm^3/g$)

$A_2$) Polyamid 6 (Viskositätszahl nach DIN 53 727 in konzentrierter Ameisensäure: VZ = 187 $cm^3/g$)

B) Modifizierter Polyphenylenether

90 Gew.-% Poly(2,6-dimethyl-1,4-phenylen)ether b1) mit einer $\eta_{red}$ = 0,58 dl/g (1 Gew.-% in $CHCl_3$, 25 °C), 9 Gew.-% Polystyrol b2) (MFI (200 °C/5 kg) = 22 g/10') und 1 Gew.-% Fumarsäure $b_3$) wurden in einem Zweischneckenextruder (L/D = 20) bei einer Zylindertemperatur von 280 °C in der Schmelze gemischt. Die Schmelze wurde im letzten Gehäuseteil des Extruders entgast, in einem Wasserbad abgekühlt und der Strang granuliert.

C) In einem 100 l Kessel wurden 33,5 Liter Wasser, 67 g Kaliumpersulfat und 50 g Natriumhydrogencarbonat, 50 g Natriumpyrophosphat und der Emulgator (Kaliumsalz der disproportionierten Abietinsäure) vorgelegt. 4 kg der Monomermischung (siehe Tab. 1) wurden vorgelegt und auf 65 bis 70 °C aufgeheizt.

Nach Anspringen der Polymerisation wurde die restliche Monomermischung (20 kg) mit einer solchen Geschwindigkeit zugesetzt, daß die Reaktionstemperatur konstant blieb. Nach vollständigem Umsatz wurde die Komponente C) durch Fällung oder Sprühtrocknung isoliert.

Tabelle 1

| Zusammensetzung der Komponente C) | | | | | |
|---|---|---|---|---|---|
| Komponente C | Beispiel | | | | Vergleichsbeispiel |
| | C I | C II | C III | C IV | C V |
| Emulgator (ppm) | 1 | 1 | 1 | 0,7 | 1,5 |
| Monomermischung (Gew.-% bez. auf C) | | | | | |
| Styrol $c_1$) | 98 | 90 | 96 | 96 | 100 |
| Methylmethacrylat $c_2$) | -- | 7 | -- | -- | -- |
| Divinylbenzol $c_{3-1}$) | 2 | -- | -- | -- | -- |
| Diallylphthalat $c_{3-2}$) | -- | 3 | -- | -- | -- |
| Butandioldiacrylat $c_{3-3}$) | -- | -- | 4 | 4 | -- |
| Mittlerer Teilchendurchmesser [$\mu$m] | 0,13 | 0,12 | 0,12 | 0,2 | 0,1 |
| Erweichungspunkt (DSC) °C | 102 | 107 | 104 | 104 | 101 |

$D_1$) Cariflex TR 1102 ®: Dreiblockkautschuk (S-B-S, Styrol-Butadien-Styrol) mit einem Styrolgehalt von 31 Gew.-% und einem Molekulargewicht ($M_w$) von 72.000 bestimmt mittels GPC in THF bei 25°C; Eichung mit Polystyrolstandards (Produkt der Shell AG)

$D_2$) Kraton G 1650 ®: hydriertes Blockcopolymer (S-EB-S, Styrol-Ethylen-Butylen-Styrol), 30 Gew.-% Polystyrol, (Produkt der Shell AG)

Herstellung der Formmassen:

Die Formmassen der Beispiele und Vergleichsbeispiele (Zusammensetzung gemäß Tabelle 2) wurden in einem gleichsinnig laufenden, kämmenden Zweiwellenextruder extrudiert und granuliert. Aus den so erhaltenen Granulaten wurden nach Trocknung durch Spritzguß bei einer Massetemperatur von 280°C, die für die nachstehend beschriebenen Messungen erforderlichen Normprüfkörper hergestellt.

Es wurden folgende Kennzahlen gemessen:

| | |
|---|---|
| Kerbschlagzähigkeit $a_k$ (23°C) | DIN 53 435 |
| Reißdehnung $\epsilon_r$ | DIN 53 455-3 |
| E-Modul $E_z$ | DIN 53 457-3 |
| VST/B (Wärmeformbeständigkeit) | DIN 53 460 |
| Durchstoßarbeit (DSA) und $LF_{(max)}$ bei 23 und -20°C | DIN 53 443 |

Die Verformung der Rundscheiben bei Schlagbeanspruchung wurde nach DIN 53 443 bestimmt. Die Meßgröße wurde aus dem instrumentierten Durchstoßtest (DIN 53 443) erhalten; dabei wurde die Kraftverformungskurve, die integriert die Durchstoßarbeit ergibt, ausgewertet. Die Verformung bei maximaler Kraft (Verformung $LF_{max}$) ist diejenige Strecke, die der Bolzen des Prüfgerätes zurücklegt, an dem die übertragene Kraft das Maximum durchläuft (vgl. hierzu DIN-Taschenbuch 18: "Kunststoffe 1 - mechanische, thermische und elektrische Eigenschaften, Prüfnormen", 8. Auflage 1984; Beuth Verlag GmbH, Berlin, Köln, Seiite 138). Die auf 23°C bzw. -20°C temperierten Rundscheiben (60-2 mm) wurden mit einer Geschwindigkeit der Kalotte (20 mm Durchmesser) von 4,5 m/s geschlagen.

Tabelle 2

Zusammensetzung und Eigenschaften der Beispiele

| | Beispiel | | | | Vergleichsbeispiel | | |
|---|---|---|---|---|---|---|---|
| | 1 | 2 | 3 | 4 | I | II | III[1)] |
| Komponenten: | | | | | | | |
| A1 | 44 | 44 | -- | 40 | 44 | 44 | 44 |
| A2 | -- | -- | 44 | -- | -- | -- | -- |
| B | 40 | 41 | 42 | 46 | 44 | 42 | 44 |
| C I | 4 | -- | -- | -- | -- | -- | -- |
| C II | -- | 3 | -- | -- | -- | -- | -- |
| C III | -- | -- | 2 | -- | -- | -- | -- |
| C IV | -- | -- | -- | 4 | -- | -- | -- |
| C V | -- | -- | -- | -- | -- | 2 | -- |
| D1 | 12 | 12 | 12 | -- | 12 | 12 | -- |
| D2 | -- | -- | -- | 10 | -- | -- | -- |
| Kern-Schale-Kautschuk[2)] | -- | -- | -- | -- | -- | -- | 12 |
| $a_k$ [kJ/m] | 26 | 25 | 31 | 24 | 25 | 24 | 17 |
| $\varepsilon_r$ [%] | 37 | 36 | 42 | 31 | 35 | 27 | 25 |
| $E_z$ [N/mm] | 2150 | 2140 | 2090 | 2260 | 2140 | 2160 | 2300 |
| VST/B [°C] | 178 | 178 | 172 | 182 | 178 | 176 | 181 |
| DSA (23°C) [Nm] | 68 | 66 | 72 | 60 | 58 | 54 | 37 |
| DSA (-20°C) [Nm] | 45 | 47 | 51 | 39 | 37 | 29 | 17 |
| $LF_{max}$ (23°C) [mm] | 19 | 18 | 21 | 17 | 15 | 13 | 12 |
| $LF_{max}$ (-20°C) [mm] | 16 | 15 | 16 | 15 | 13 | 11 | 9 |

1) Vergleichsversuch nach der Lehre der US 4 681 915

2) Pfropfkautschuk mit einem vernetzten Butylacrylatkern (75 Gew.-%) und einer Hülle aus vernetztem Polystyrol (25 Gew.-%)
Vernetzer des Kerns: 1,3-Butylenglykoldiacrylat (0,2 Gew.-%)
Vernetzer der Hülle: Divinylbenzol (1 Gew.-%)
(Glasstufen: -45/ + 101°C)

Die Ergebnisse in Tabelle 2 belegen, daß nur vernetzte Polymerpartikel mit einer Glastemperatur von über 0°C und in der erfindungsgemäßen Einsatzmenge zu einer Erhöhung von Durchstoßarbeit und Schädigungsverformung führen.

**Patentansprüche**

1. Thermoplastische Formmassen auf Basis von, gegebenenfalls modifizierten, Polyphenylenethern und Polyamiden, enthaltend als wesentliche Komponenten
   A) 25 bis 74,8 Gew.-% eines thermoplastischen Polyamids,
   B) 25 bis 74,8 Gew.-% eines Polyphenylenethers,
   C) 0,2 bis 15 Gew.-% zumindest teilweise vernetzte Polymerpartikel mit einer Glasübergangstemperatur (Tg) von oberhalb 0°C,
   D) 0 bis 25 Gew.-% eines schlagzähmodifizierenden Polymeren,
   E) 0 bis 50 Gew.-% eines faser- oder teilchenförmigen Füllstoffs oder deren Mischungen,
   F) 0 bis 20 Gew.-% eines Flammschutzmittels.

2. Thermoplastische Formmassen nach Anspruch 1, wobei die Komponente B) bis zu 50 Gew.-%, bezogen auf B), durch ein vinylaromatisches Polymeres ersetzt ist.

3. Thermoplastische Formmassen nach Anspruch 1 und 2, wobei die Komponente C) ein durch Emulsionspolymerisation hergestelltes vernetztes Polystyrol mit einem mittleren Teilchendurchmesser ($d_{50}$) von 0,05 bis 5 $\mu$m ist.

4. Verwendung der thermoplastischen Formmassen gemäß Ansprüchen 1 bis 3 zur Herstellung von Folien und Formkörpern.

5. Folien und Formkörper auf Basis von thermoplastischen Formmassen gemäß Ansprüchen 1 bis 3.

Europäisches Patentamt

# EUROPÄISCHER RECHERCHENBERICHT

Nummer der Anmeldung

EP 92 11 5130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 304 041 (NIPPON PETROCHEMICALS)<br>--- | | C 08 L 77/00<br>C 08 L 71/12 //<br>(C 08 L 77/00<br>C 08 L 71:12<br>C 08 L 25:04 )<br>(C 08 L 71/12<br>C 08 L 77:00<br>C 08 L 25:04 ) |
| A | EP-A-0 407 832 (BASF)<br>--- | | |
| A | EP-A-0 295 103 (SUMITOMO)<br>--- | | |
| A | PATENT ABSTRACTS OF JAPAN, Band 12, Nr. 344 (C-528), 16th September 1988; & JP-A-63 101 452 (MITSUBISHI) 06-05-1988<br>--- | | |
| A | DE-A-3 601 581 (BASF)<br>----- | | |
| | | | **RECHERCHIERTE SACHGEBIETE (Int. Cl.5)** |
| | | | C 08 L |

Der vorliegende Recherchenbericht wurde für alle Patentansprüche erstellt

| Recherchenort | Abschlußdatum der Recherche | Prüfer |
|---|---|---|
| DEN HAAG | 29-12-1992 | LEROY ALAIN |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument